# EUROPEAN PATENT APPLICATION

(11) **EP 4 083 596 A1**
(43) Date of publication of application: **02.11.2022**
(21) Application number: 21382389.1
(22) Date of filing: 30.04.2021
(51) Int. Cl.: G01N 1/22

(54) **DRONE FOR MEASURING ODOR CONCENTRATION**

(71) Applicant: DEPURACIÓN DE AGUAS DEL MEDITERRÁNEO, S.L., 46980 Paterna (Valencia) (ES); Fundació Institut de Bioenginyeria de Catalunya (IBEC), 08028 Barcelona (ES); Universitat de Barcelona, 08028 Barcelona (ES)
(72) Inventor: DOÑATE HERNÁNDEZ, Silvia, 46980 Paterna (Valencia) (ES); ESCLAPEZ VICENTE, María Deseada, 46980 Paterna (Valencia) (ES); BURGUÉS CALDERÓN, Javier, 08028 Barcelona (ES); MARCO COLÁS, Santiago, 08028 Barcelona (ES)
(74) Representative: ABG Intellectual Property Law, S.L.

(57) **Abstract**

The present invention relates to a drone for measuring odor concentration, characterized by a specific configuration which allows samples to be collected in locations which would otherwise be hard to access or inaccessible, and under conditions in which the drive means do not affect the measurement. Additionally, the invention is characterized by the correct marking of the spatial location of each sample collection and measurement, even if the sample collection and measurement requires a transport time of the suctioned air.

## Description

### OBJECT OF THE INVENTION

The present invention relates to a drone for measuring odor concentration, characterized by a specific configuration which allows samples to be collected in locations which would otherwise be hard to access or inaccessible, and under conditions in which the drive means do not affect the measurement.

Additionally, the invention is characterized by the correct marking of the spatial location of each sample collection and measurement, even if the sample collection and measurement requires a transport time of the suctioned air.

### BACKGROUND OF THE INVENTION

The techniques for carrying out an odor concentration estimate according to the state of the art include either sensors that are located in a fixed manner, or air samples with an odor are taken in a place of interest to then be measured and analyzed in a laboratory (dynamic olfactometry) for the purpose of estimating odor concentration. In known solutions, sampling is typically performed at a different physical location from where said samples are measured.

In fixed sensing means installations (electronic nose), variations in wind speed and direction may cause the nose to no longer be in the emission plume, giving rise to values that widely differ from reality. Therefore, measurements at fixed points are more sensitive to meteorological conditions.

Up until now, it was typical in elevated, hard to access locations to arrange a fixed sensor in the elevated location or to use a scaffold-like structure so that the sensor could measure the air in said specific location of interest. Furthermore, air measurements in locations where the fixed installation of one or more sensors is not possible have been carried out with the use of poles which make measurement locations that would otherwise be impossible to access accessible. Nevertheless, the length of these poles is limited, and in area sources where the source of the odor is, for example, a large deposit or its surrounding areas are not accessible, even these solutions cannot offer sufficient range. Furthermore, there is also the drawback of fugitive emissions in valves, connections, etc., which multiply the possible locations of the sources of odor.

In terms of the methodologies and equipment for evaluating odor concentration, expensive olfactometry measurements based on standard EN13725, which involve panels of human assessors and the monitoring of the concentration of a few gases using fixed gas detectors installed in the plant in which the odorous gas emission focal points are located, are used at present. This leads to odor measurements with a low time resolution in the case of dynamic olfactometry and with a low spatial density in the case of fixed installations, which do not allow a precise characterization of the events causing the emission of odors.

Odors are the human perception of complex mixtures of gases and volatile compounds. The relationship between the composition of the gas, the concentration of the odor, and its hedonic tone is not well known. The perception of an odor does not simply correspond to the linear combination of the effects of the individual components, but rather the effects of synergy and antagonism between the components of the mixture are produced. Additionally, there are compounds which can individually be perceived by the human olfactory system at extremely low concentration levels (ppbv and subppbv) which are hard to detect by means of chemical sensing.

The determination of odor concentration defined according to standard EN13725 by means of chemistry instruments has been approached from various angles. One of them is based on sample analysis by means of gas chromatography-mass spectrometry (GC-MS), in an attempt to completely identify the components of the mixture. Next, mathematical models which attempt to predict the odor concentration are applied. However, this method requires a long-lasting analysis (tens of minutes), the transport of the sample to an analytical laboratory, and the evaluation of the results by expert staff. Additionally, the performance of quantitative analyses and even the identification of all of the compounds in the mixture is extremely complicated and expensive. A second alternative is based on the selective measurement of a single compound known for its low odor threshold or correlation with odorous compounds. This is the case of hydrogen sulfide (H₂S) or ammonia (NH₃). Although these gases are certainly important, limiting the analysis to one of them renders the evaluation blind to the impact of other compounds which are present in the sample and may make a decisive contribution to the intensity of the odor. The analysis of these individual compounds can be performed *in situ* with hand-held instruments, whose limits of detection are not comparable to the human olfactory sense. Lastly, the estimation of the odor concentration has been approached by means of electronic noses (e-noses). These instruments are based on an array of chemical sensors with various sensitivity patterns which, along with suitable signal processing and multivariate calibration models, allow the continuous estimation of the odor concentration, albeit with a lower precision than with dynamic olfactometry. These instruments are installed in fixed positions close to the sources of odor or along the perimeter of the facility. These instruments are calibrated under laboratory conditions using air samples taken in proximity of the sources of odor and stored in polymer bags, which are evaluated by means of dynamic olfactometry to obtain the odor concentration value that will serve as a reference.

The problems associated with the described limitations on the low spatial and time resolution or the need to use structures in some cases, among others, are resolved with the invention described below.

### DESCRIPTION OF THE INVENTION

The present invention proposes a solution to the aforementioned problems by means of a drone for measuring odor concentration under real operating conditions according to claim 1, and a system according to claim 15.

A first inventive aspect provides a *drone for measuring odor concentration under real operating conditions, the drone comprising:*
- *a measurement chamber housing therein at least one sensor configured for measuring at least one parameter of air samples with odor,*
- *a first tube fluidically connected at a first end to the measurement chamber and comprising a second free end, spaced from and located below the drone, through which the first tube collects air samples with odor;*
- *a locating device comprising a position signal measurement element located at the second free end of the first tube, and*
- *at least one processing unit communicating with the at least one sensor and communicating with the locating device;*
*wherein*
*the processing unit is configured for processing and storing the sampling data measured in the measurement chamber and the positioning data of the locating device, and for determining the measured odor concentration, assigning to said data the position where it has been acquired.*

The present invention provides a drone which allows the odor concentration to be measured under real operating conditions of the source of odor. These real conditions on the basis of which the present drone operates correspond to the field conditions in which the sample is collected during the flight of the drone over the area of interest, and are carried out such that the drone provides measurements which correspond to data acquisition and non-intrusive measurements. These measurements typically cannot be carried out given that the measurement points are located in positions that cannot be accessed by a person, even when using poles. The use of a drone initially seems impossible given that a drone is driven with propellers which propel a large air volume downwards in order to maintain its position (known as "downwash"), disrupting the region of measurement. Nevertheless, the combination of features configuring the drone allows measurements to be acquired in locations that would otherwise be inaccessible and without being disturbed by the drone propulsion means.

The drone has been equipped with a set of components and devices which facilitate measuring odor concentration in locations of interest corresponding with large areas over which the drone flies, these components and devices being those described below. In particular, the drone is characterized by the fact that it allows the simultaneous acquisition of the gas sample for evaluation by means of the array of sensors and the processing unit and by means of dynamic olfactometry according to standard EN13725. According to a preferred example of the invention, the acquisition of the sample at the same time that the measurement is taken with at least one sensor of the measurement chamber allows the calibration of the prediction model on which the processing unit is based.

The drone comprises a measurement chamber coupled to the structure of the drone and housing internally at least one sensor. This sensor arranged inside the measurement chamber is configured for measuring at least one parameter of air samples with odor which are collected in the location of interest while the drone is in flight. Parameter will be understood to mean any variable (gas concentration, temperature, pressure, etc.) which is translated into a signal through a sensor. In particular, at least one sensor responds to one or more chemical compounds in the gas phase.

The drone further comprises a first tube located at one of its ends, the first end, fluidically connected to the measurement chamber, whereas the other end, the second end, is free. That is, the passage of fluids from one end to the other end of the tube is allowed. The second end would be spaced from and arranged below the drone when said drone is in the flight operating mode. In particular, through this first tube, at its second free end, the drone collects air samples, usually with an odor, flowing towards the first end of the tube connected to the measurement chamber for the air sample with an odor to reach the inside of this measurement chamber and thus it can be measured by the at least one sensor housed in said measurement chamber.

In turn, the drone comprises a locating device, for example a GPS type device, located at the second free end of the first tube. This locating device comprises a position signal measurement element capable of measuring the position in which the free end of the first tube is located at all times, mainly when the drone is in the flight operating mode. This locating device is independent of the actual location of the drone, which advantageously allows, for example, being able to precisely map out the generated signals depending on the measurements performed in samples collected at each point. If said GPS receiver were installed in the drone itself, in conditions of wind or due to the drone's own inertia, the position of the drone would not coincide with the position in which the free end of the first tube where the sample is collected is located, leading to an error in the marking of the sample collection position. Nevertheless, the present configuration prevents this error by arranging the GPS receiver at the free end of the first tube where sample collection is performed.

The present drone is also equipped with a processing unit which communicates with the at least one sensor housed in the measurement chamber and with the locating device located at the free end of the first tube. This processing unit is distinguished in that it is configured for processing and storing the sampling data measured by the sensor in the measurement chamber, as well as the positioning data measured by the locating device also. Based on this processed and stored data, the processing unit determines the measured odor concentration, assigning to said data the position where it has been acquired. Particularly, the processing unit allows converting the signals sampled by the sensor of the measurement chamber into odor concentration units. Furthermore, the processing unit can also be configured for controlling the excitation of the sensor depending on the type of sensor.

The drone is configured for being able to collect samples in real time, whereas the processing unit can process the data and determine the odor concentration measured in each position in real time or after collecting the samples, for example in an external information processing unit by means of post-processing.

Advantageously, the present drone allows the sampling position during the drone flight phase to be known with precision, and it can furthermore assign to each collected sample a specific field position. In turn, the drone advantageously allows the odor concentration corresponding to each sample measured in a specific location to be determined as a result of the measurement of at least one sensor and the processing and calculation of the processing unit. Therefore, the present drone allows the air quality and the spatial distribution of the odor to be evaluated such that the drone rotor disturbance effect is prevented as a result of the sample being collected at the free end of the tube away from the drone.

The locating device incorporated in this drone, particularly located at the free end of the tube, facilitates producing a precise map of the signals by separating the movement of the end where the samples are acquired from the movement of the drone supporting the tube.

In a particular embodiment, the drone is configured for supplying energy to the sensor of the measurement chamber, to the locating device, and to the processing unit by means of the drone itself or by means of an energy supply device coupled to the drone, such as a battery, for example. This energy supply facilitates and allows the operation of said devices.

In a particular embodiment, *the drone further comprises:*
- *a sampling system configured for storing a given air volume for calibrating the at least one sensor of the measurement chamber; and*
- *a second tube fluidically connected at a first end to the sampling system and comprising a second free end through which the second tube collects air samples with an odor at the same time the first tube collects samples;*
*wherein the position of the second end of the second tube is located in the position of the second end of the first tube.*

The sampling system is configured to carry out the calibration of the sensors housed in the measurement chamber. This calibration is based on the construction of a multivariate predictive model for the determination of the odor concentration.

In turn, the drone is equipped with a second tube comprising a first end connected to the sampling system and a second free end through which the second tube collects air samples with an odor. That is, the second tube allows the passage of fluids from the free end towards the sampling system. Therefore, the second tube collects air samples with an odor at the same time the first tube collects samples which are being measured in the chamber. The second free end of the second tube is located in the same position as where the second free end of the first tube is located.

Therefore, to carry out the calibration of the sensors of the measurement chamber, the sampling system collects, at the same time as the first tube, air samples with odor by means of the second tube. Compared with the solutions of the state of the art, with the calibration of the sensors, the present drone allows the gas samples with odor to be analyzed in flight, and therefore, avoids time delays due to transfers to a laboratory for performing sample measurements, and the loss of spatial resolution acquired by measuring continuously at the sample acquisition point. That is, the present drone simultaneously transports the measurement chamber, allowing the sensors with gas samples with odor, which correspond to those acquired by the sensors of the drone, to be calibrated so that the calibration is more precise. Nevertheless, the gas samples with an odor collected by the sampling system are transferred to a laboratory for calibrating/validating the measurements which are carried out in the measurement chamber. The sampling system therefore only has to be transported by the drone when the correct calibration of the sensors is to be ensured. In any other case, the drone is free of this device, providing greater maneuverability and especially greater autonomy by dispensing with the extra weight that the transport thereof involves.

Having air samples collected at the same points as those measured by the drone in real time makes it possible to analyze the samples by dynamic olfactometry and to assign an odor concentration to them. Therefore, the predictive models which will subsequently allow the odor concentration to be estimated without having to take the samples to the laboratory can be prepared. This training phase with reference values based on the samples acquired with the sampling system is what has generically been identified as calibration. The samples taken to the laboratory have the function of allowing the calibration of the sensors given that the storage of a given air volume mixes the measurements carried out during capture. This mixture is the reason why it has also been previously indicated that there is a loss of spatial resolution in measurements based on the sample stored in the sample system, and the reason why the drone does provide the required spatial resolution in its measurements through its measurement chamber.

In this manner, once the system has been calibrated, the drone is capable of determining the odor concentration in a precise manner without needing to transfer the samples to a laboratory to be analyzed there, but rather the measurement and even the processing and determination can be done by the drone itself with the necessary spatial resolution. The measurements which allow a spatial map of the measurements to be reconstructed are the ones that are acquired in real time by the drone.

In a particular embodiment, the first tube or the second tube or both are flexible tubes and are vertically suspended in the lower part of the drone and substantially parallel to each other. Advantageously, the fact that these tubes are flexible facilitates the flight, landing, and/or takeoff of the drone, and in turn they reduce the weight of the drone. Furthermore, both first and second tubes are parallel to each other in order to configure a single element suspended from the drone such that the drone is more maneuverable compared with the case of using independent suspended elements.

In a particular embodiment, the first tube is ballasted at its second free end with a mass fixed thereto. Furthermore, in another particular embodiment, both first and second tubes are ballasted at their respective second free ends with a mass fixed thereto. This fixed mass type ballast arranged at the free ends of the tubes reduces the oscillation of the tubes due to the movement of the drone or the impact of the wind in order to thus obtain a stable sampling point during the measurement given that it has a higher inertia and hinders being dragged by air currents.

Specifically, the first tube and second tubes comprise the same length. This is to ensure that the collection of samples performed by each of these tubes is virtually the same since they are located in one and the same area of air with an odor.

In a particular embodiment, *the processing unit is configured for assigning the position where the odor sample collections have been acquired by applying a time delay corresponding to the estimated time for a collection acquired at the second free end of the first tube to be displaced until it reaches the measurement chamber.* The processing unit takes into account the time that elapses from when the sample is collected at the second free end of the first tube until the sample reaches the inside of the measurement chamber and is measured by the at least one sensor. Therefore, the processing unit determines in a precise and real manner the odor concentration in a specific position, this position being the one assigned to each collected sample. A specific way of establishing this time is by estimating the speed of the known fluid, the flow rate, and the section of conduits through which the air flows. The central processing unit performs sampling at the position of the GPS sensor and assigns the position to the air sample that arrives after the lapse of the estimated time for the sample to be displaced until it reaches the chamber following its acquisition coinciding with the acquisition of the position through the GPS sensor.

In a particular embodiment, *the drone comprises cleaning means configured for cleaning the inside of the measurement chamber with clean air, wherein the cleaning means comprise a third tube fluidically connected with the inside of the measurement chamber and a suction pump for suctioning clean air into the measurement chamber.*

The drone is configured for being able to purge the measurement chamber during the actual flight of the drone through cleaning means. In particular, the cleaning means comprise a third tube through which the passage of clean air into the measurement chamber by means of the suction operated by a suction pump is allowed. With this configuration, a solution is provided for the memory effect of the sensors housed in the measurement chamber by purging the inside of the measurement chamber with clean air between consecutive sample measurements, thereby allowing the sensors to reach their baseline quickly; that is, they reach operating conditions without memory effects for having been carrying out measures with air with an odor. This is fundamental for the sensors to be able to take precise measurements given that the response of the sensors to a given odor concentration depends not only on this concentration but also on the state of the sensor before taking the measurement.

In a more particular embodiment, *the third tube is a rigid tube installed in an upper part of the drone and comprises a length smaller than the length of the first and second tubes.* Unlike the first and second tubes intended for collecting air samples with odor, this third tube is arranged in the upper part of the drone, that is, facing upward of said drone. The third tube thereby has a range that is opposite the range of the othertubes, which allows the collection of clean air from the upper area of the drone where suction is produced by its drive means, which clean air is driven into the detection chamber for the purpose of cleaning the sensors between each measurement. Furthermore, this third tube must be rigid in order to thus prevent it from getting in the way between the actual propellers of the drone and maintain the elevated position thereof.

In a particular embodiment, *the drone comprises for each first tube and second tube a suction pump configured for suctioning air with an odor through the first and second tubes, respectively, and at least one solenoid valve configured for regulating the passage of air into the measurement chamber.* Through the suction pumps, the air sample with an odor collected by each of the first and second tubes is suctioned into the detection chamber and the sampling system, respectively. In turn, this fluid flowing through the inside of the first tube as a result of the suction effect can be regulated by means of a solenoid valve which controls the passage thereof. Action on the flow through the first tube and second tube is independent.

In a particular embodiment, *the sampling system is based on a vacuum chamber housing therein a polymer bag, wherein this bag expands when the vacuum is generated by suctioning the air sample with an odor.* Advantageously, this sampling system allows air with odor for dynamic olfactometry to be suctioned without said air contacting any pump, such that along its entire path the air with an odor is only in contact with inert materials.

In a particular embodiment, *the measurement chamber further comprises:*
- *either a temperature sensor,*
- *or a humidity sensor,*
- *or a pressure sensor,*
- *or else a combination of any of the foregoing,*
*all of which are connected for communicating with the processing unit.*

In particular, the values measured by the sensors are the input of an artificial intelligence unit. The measurements by sensors for detecting a concentration of a specific gas and other non-specific sensors have a correlation with any of the thermodynamic, temperature, and pressure variables, and with the humidity. The inclusion of these measurements allows, among other applications, more precise values about odor concentration to be established at the output of the artificial intelligence unit.

In a particular embodiment, *the drone further comprises a system for stabilizing the temperature on the inside of the measurement chamber.* The temperature on the inside of the measurement chamber is thereby stabilized if needed and precise measurements between each sample collection are thereby obtained.

In a particular embodiment, *the measurement chamber comprises at least one sensor which responds with a signal depending on the concentration of (a) non-specific given chemical compound(s), or a sensor which responds with a signal depending on the concentration of a specific given chemical compound, or a combination of both.*

In specific cases in which a combination of specific and non-specific sensors is used, it is possible to determine the odor concentration in conditions with a significant variation in the composition of the chemical compounds causing the odor.

In a particular embodiment, *the drone further comprises a flow sensor located at the inlet of the measurement chamber where the first end of the first tube is connected, and it is configured for monitoring the flow rate of the incoming air current.*

The flow rate value is relevant, for example, when determining the time for the air entering the first tube to travel until reaching the chamber for establishing the exact position of its acquisition. It may also be relevant when establishing the sample capture conditions given that high flow conditions may modify pressure and temperature conditions.

In a particular embodiment, *the processing unit is configured for running an artificial intelligence module trained for receiving a plurality of parameters measured by the combination of signals from specific and non-specific sensors comprised in the measurement chamber and providing an odor concentration value.*

In a more particular embodiment, *the artificial intelligence module has been trained by using the signals provided by the sensors of the measurement chamber while taking measurements in the field and*/*or in the laboratory for mixtures of gases the odor concentration of which is known.*

That is, the artificial intelligence module is capable of correlating the signals provided by the sensors while taking measurements in the field and, under the calibration carried out in a laboratory, providing odor concentration values. An example based on this artificial intelligence module has already been described above. A scope of application where use of this module has been very useful is the application which requires odor concentration values in situations where the chemical composition generating the odor is very diverse. It has been verified that the use of a combination of specific and non-specific sensors acquire the potential to provide reliable data about the concentration of the odor even with compositions in which some of the components do not correspond with a specific chemical sensor.

More particularly, *the set of signals provided by the sensors of the measurement chamber used in the artificial intelligence module training phase incorporates data sets corresponding to the time evolution due to ageing of the sensors.*

The provision of this artificial intelligence module and its training phase, which is run by the processing unit, facilitates the calibration of measurements in the measurement chamber through the sensors housed therein. Sensors age and this modifies the signal the sensors provide in operating conditions under the same air composition conditions. According to this embodiment, sensors with a performance that has been modified due to the effect of ageing do not need to be changed, but rather the variability of the training data causes the artificial intelligence module to take into account variations due to ageing, and therefore provides likewise reliable values even though the sensors are subjected to ageing.

In a particular embodiment, the drone comprises a structural support located in the lower part of the drone and on which the measurement chamber or the sampling system, or both are fixed, this structural support being removable. The fact that this support is located in the lower part of the drone facilitates the arrangement of the first and second tubes below the drone, and in turn prevents the sampling system and the measurement chamber from touching the ground or colliding with the landing gear of the drone during landing. Furthermore, since this support is removable, it facilitates access to the measurement chamber as well as to the sampling system for the purpose of being changed or inspected when the drone is not in the flight operating mode.

Another advantage of this configuration is that its lower position ensures the stability of the drone in flight.

In a particular embodiment, the measurement chamber comprises from the suctioned air inlet through the first tube and the position where the at least one sensor is located an air inlet speed homogenizing device. According to a first embodiment, this homogenizing device is configured for generating turbulence which favors the mixing of the inlet conditions.

A second inventive aspect provides *a system comprising a drone according to the first inventive aspect and a base station, wherein the processing unit of the drone communicates with a processing unit of the base station, the processing unit of the base station being configured for running an artificial intelligence module trained for receiving a plurality of parameters measured by the combination of signals from specific and non-specific sensors comprised in the measurement chamber of the drone and providing an odor concentration value.*

In a particular embodiment, the base station receives in real time the odor concentration values provided by the processing unit of the drone. According to this configuration, the sole task of the processing unit of the drone is to ensure the measurement and transmission of the measured data, leaving the task of processing said data through the processing unit of the base station. With this configuration, the energy consumption requirements are transferred in part to the base station, increasing the autonomy of the batteries of the drone, and therefore extending the operation time of the drone in the air.

In a particular embodiment, the artificial intelligence module has been trained by using the signals provided by the sensors of the measurement chamber while taking measurements in the field and/or in the laboratory for mixtures of gases the odor concentration of which is known.

### DESCRIPTION OF THE DRAWINGS

These and other features and advantages of the invention will become more apparent from the following detailed description of a preferred embodiment, given solely by way of non-limiting and illustrative example in reference to the attached figures.
Figure 1 shows a schematic front view of a drone according to an embodiment of the present invention.
Figure 2 shows a schematic view of some components of the drone of Figure 1 and how they are connected to each other according to an embodiment.
Figure 3 shows a schematic perspective view of the support structure coupled to the drone of Figure 1.

### DETAILED DESCRIPTION OF THE INVENTION

The present invention provides a drone configured for being able to determine the odor concentration under real operating conditions in a plant or field of interest. The determined odor concentration is preferably expressed in standardized units: European odor units per cubic meter (ouE/m³), odor units per cubic meter (ou/m³), dilutions-to-threshold (D/T), odor index = 10 x log, or Threshold Odor Number (TON).

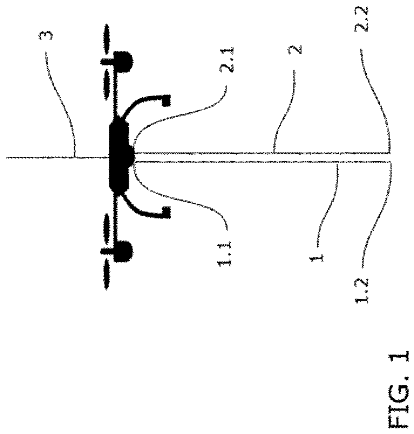

A particular example of a drone according to the present invention and based on Figures 1 to 3 is described below.

The drone of this embodiment comprises a measurement chamber (7) housing therein a plurality of sensors configured for measuring parameters of air samples with an odor which reaches them by means of a first tube (1). Among these sensors, at least one responds with a signal that is a function of the concentration of (a) non-specific given chemical compound(s) and at least another sensor responds with a signal which is a function of the concentration of a specific given chemical compound.

In a particular example, the measurement chamber (7) also comprises at its inlet (where it is connected with the first tube (1)) a flow sensor for monitoring the flow rate of the air current entering the measurement chamber (7) by means of the first end (1.1) of the first tube (1).

Furthermore, the measurement chamber (7) also houses therein one of the following sensors or a combination thereof: temperature sensor, humidity sensor, and pressure sensor.

The measurement chamber (7) is furthermore equipped with a system which stabilizes the temperature inside it. In a particular example, this temperature stabilizing system comprises a thermal resistor which is in charge of dissipating a suitable power in order to keep the temperature on the inside of the measurement chamber (7) stable in a range between 50°C and 60°C, with a variation of ± 1ºC with respect to a pre-established set point value. According to this embodiment, the temperature stabilizing system includes a closed-loop control with a temperature sensor for activating the resistor depending on whether the temperature drops from the set point temperature.

The drone in turn comprises a sampling system (9) configured for storing a given air volume reaching it by means of a second tube (2) for subsequent analysis in a laboratory.

The first flexible tube (1) is connected to the measurement chamber (7) through a first end (1.1), whereas the opposite end, the second end (1.2), is free. This second end (1.2) is located below the drone and spaced from same, that is, it is understood that the first tube (1) hangs below the drone as can be seen in Figure 1. This first tube (1) is intended for collecting air samples with an odor which are measured by the sensors housed in the measurement chamber (7). The connection of this first tube (1) with the inside of the measurement chamber (7) is fluidic, that is, it allows the passage of fluids, such as air with odor, through said first tube (1) into the measurement chamber (7).

This first tube (1) comprises at its free end (1.2) a GPS type locating device (12), which is formed by a position signal measurement element. By means of this locating device (12), the drone is capable of assigning a position to each collected air sample with odor.

The second also flexible tube (2) is connected to the sampling system (9) through a first end (2.1), whereas a second end (2.2) opposite to the first end (2.1) is free. Like the first tube (1), the second tube (2) is located below the drone and spaced from same as observed in Figure 1. The second tube (2) is in charge of the collecting air samples with odor which are directed into the sampling system (9). Similar to the first tube (1), the connection of the second tube (2) with the inside of the sampling system (9) is fluidic.

As observed in Figure 1, the position of the second end (2.2) of the second tube (2) is located in the position of the second end (1.2) of the first tube (1). Furthermore, these tubes (1, 2) are vertically suspended in a lower part of the drone and are substantially parallel to each other when the drone is in the flight operating mode. The flexibility of the tubes (1, 2) facilitates the landing and takeoff of the drone and reduces weight in the drone.

These tubes (1, 2) furthermore have a mass fixed at their free ends (1.2, 2.2), respectively, like a ballast to ensure the stability of the tubes (1, 2) during the flight of the drone and thus reduce the oscillation of said tubes, achieving a stable sampling point during the measurement.

As can furthermore be observed in Figure 1, both the first tube (1) and second tube (2) have the same length, which ensures that they collect the same air sample with an odor.

The first tube (1) is capable of collecting a sample at its second free end (1.2) and said sample is led into the measurement chamber (7) as a result of the action of a first suction pump (8). This first suction pump (8) is capable of suctioning air with an odor through the first tube (1). In turn, the drone provides a first solenoid valve (5) which regulates the passage of fluid (such as air with an odor) through this first tube (1). It should be pointed out that the first suction pump (8) is located downstream of the measurement chamber (7) such that there is no possibility of contaminating the air given that it has already passed through the measurement chamber (7). That is, following the flow current lines, the gas enters through the first tube (1), passes through the measurement chamber (7), and it is then when the gas reaches the suction pump (8).

The same occurs for the second tube (2) such that a second suction pump (10) suctioning the air sample with an odor through this second tube (2) into the sampling system (9) is provided.

The sampling system in particular works according to a lung method and is based on a vacuum chamber housing therein a polymer bag, for example a Nalophan type bag (according to standard EN13725). This bag expands when there are vacuum conditions in the vacuum chamber and therefore on the outside of the polymer bag causing it to expand inside the vacuum chamber and suctioning the air sample with an odor flowing through the second tube (2) until reaching the inside of the polymer bag. Advantageously, this system allows the air sample with an odor not to contact the suction pump.

Although a suction pump (10) has been included, this pump does not need to be located in the drone.

For being able to purge the measurement chamber (7) between taking consecutive sample measurements, the drone is equipped with cleaning means which are in charge of cleaning the inside of this measurement chamber (7) with clean air. For this purpose, a third rigid tube (3), such as the one shown in Figure 1, is provided and is connected at one of its ends to the measurement chamber (7). Furthermore, a suction pump, not shown in the figure, which is capable of suctioning clean air through the third tube (3) into the measurement chamber (7), is provided. In turn, a second solenoid valve (5) regulates the passage of fluids through the third tube (3). As seen in Figure 1, the third tube (3) is coupled in the upper part of the drone and comprises a length that is smaller than the length of the first tube (1) and second tube (2).

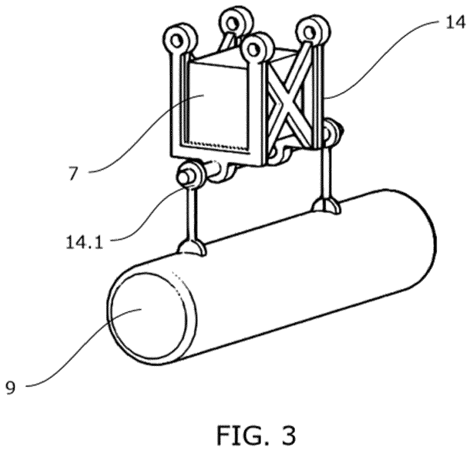

The measurement chamber (7) and the sampling system (9) are supported by a structural support (14) such as the one shown in Figure 3. This support (14) is located in the lower part of the drone and said measurement chamber (7) and the sampling system (9) are fixed on said support, and it is furthermore characterized by being a removable support. In particular, the sampling system (9) is secured to a two rings (14.1) of the support (14) in the lower part thereof, whereas the measurement chamber (7) is fixed inside the support (14). This support (14) has two cross-shaped side brackets providing mechanical robustness to the support (14), allow it to support up to about 10 kg. Since the support (14) is removable, the fasteners are quick to access, and therefore tools for anchoring and detaching the measurement chamber (7) and the sampling system (9) are not needed.

The drone further comprises a processing unit (11) which communicates data with the sensors of the measurement chamber (7) and with the locating device (12) fixed at the free end (1.2) of the first tube (1).

This processing unit (11) is configured for processing and storing the measurements performed in the measurement chamber (7), as well as the location data of the locating device (12) and of the sampling system (9). Based on this data, the processing unit (11) is capable of determining the measured odor concentration, assigning to said data the position where each sample is acquired. In particular, the processing unit is configured for assigning the position where the collections of air sample with odor have been acquired by applying a time delay. This time delay corresponds to the estimated time it takes for the sample collected at the free end (1.2) of the first tube (1) to be displaced until it reaches the inside of the measurement chamber (7).

Both the sensors of the measurement chamber (7) and the sampling system (9), as well as their respective suction pumps (8, 10) and solenoid valves (4, 5) are activated remotely through the processing unit (11).

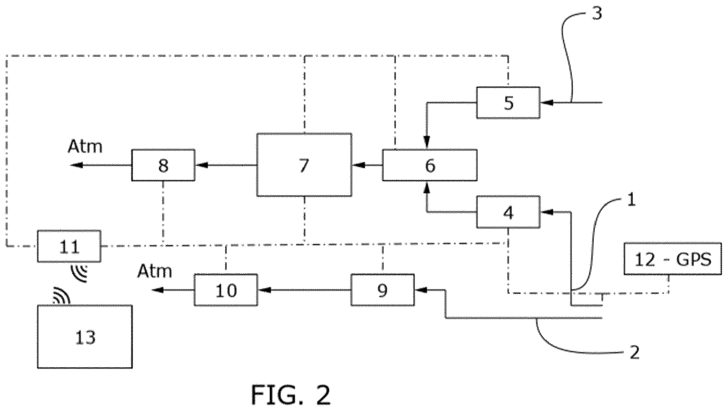

According to an example of the present invention, and based on Figure 2, the processing unit (11) communicates data with the processing unit of a base station (13). The processing unit (11) generates a control signal when it receives a command from the base station (13). To that end, the firmware of the processing unit (11) periodically listens to the radio port in search of the command in question. If the reception is affirmative, a digital "1" is sent in the corresponding I/O pin and an internal timer with a duration of 1 minute is activated. When said timer expires, the digital signal is set to "0" to deactivate the pump in question and end the sampling.

In particular, the processing unit (11) runs an artificial intelligence module trained for receiving a plurality of parameters measured by the combination of signals from the specific and non-specific sensors housed in the measurement chamber (7) in order to thus provide an odor concentration value. This intelligence module is trained by using signals provided by the sensors of the measurement chamber (7) during the phase of collecting samples in the field (and/or in the laboratory) for mixtures of gases the odor concentration of which is known as a result of the olfactometry analysis of said samples. The data sets used in the artificial intelligence module training phase incorporate the time evolution due to ageing of the sensors. In particular, this module is trained by analysis of the same samples measured by means of a panel of human assessors in a standardized manner, in particular according to standard EN13725. That is, the drone is capable of predicting the odor concentration according to human perception, but with a standardized calibration methodology causing the measurements to be independent of the perception of a given person, and therefore being objective measurements.

Furthermore, the artificial intelligence module according to another embodiment can be trained to reject given chemical composition variations due to the presence of various sources contributing to the odor. In turn, the artificial intelligence module can be used for determining which source is the one that is contributing more odor at a specific point of the location where the measurement is being carried out. This is the case, for example, of a plant which may have one or more sources of odor.

The base station (13) according to one embodiment receives in real time the odor concentration values determined by the processing unit (11) of the present drone.

In particular, the artificial intelligence module training phase proposes an embodiment of a predictive model which is based on the use of three sets of samples obtained under real operating conditions, and they are: optimization samples of the model, selection samples of the model, and validation samples of the model. The optimization samples are those which are used for training several models, each with different parameters. The selection samples of the model serve to choose, from among all these models, the one that offers the highest predictive power in blind samples. The validation samples are used to check the prediction capacity of the selected model in future blind samples. In this case, model must be understood to mean the mathematical model implemented by the artificial intelligence module for determining the output of the odor concentration depending on the input parameters. In all cases, these sets of samples are always obtained on different days and, where possible, under a variety of meteorological and plant operating conditions. In sample collection days, the measurement chamber (7) and in particular its sensors analyze the samples of all the relevant sources of odor at different distances from the emission focal point. According to a specific example, the validation of the calibration model of the measurement chamber (7) uses at least 20 samples obtained on 4 different days spaced out from one another by at least 15 days.

Figure 2 schematically shows the different components forming the drone described above and the discontinuous line shows the control loop or communication between these components of the drone. In particular it can be observed how, on one hand, the drone comprises two inlets for air with an odor through a first tube (1) and second tube (2). The air sample with an odor is thereby taken into a detection chamber (7) by means of the first tube (1) and is also taken into the sampling system (9) by means of the second tube (2). On the other hand, the drone comprises an inlet for the entry of clean air into the measurement chamber (7) through a third tube (3). The passage of air with an odor into the measurement chamber (7) is regulated by means of a first solenoid valve (4), whereas the passage of clean air into this same measurement chamber (7) is regulated by means of a second solenoid valve (5). In any of these cases, the propulsion of the air with an odor or clean air into said detection chamber (7) is operated by a first suction pump (8).

Figure 2 shows a pre-chamber (6) where the air with an odor or the clean air pass before being respectively introduced in the measurement chamber (7). This pre-chamber (6) is optional and should have small dimensions because it would thus reduce spatial resolution. Therefore, in a preferred example this pre-chamber (6) is not provided in order to increase spatial resolution.

In contrast, the sampling system (9) receives the air sample with odor through the second tube (2) by means of the action of the second suction pump (10). In turn, this figure shows the arrangement of a GPS locating device (12) at the free end of the first tube (1).

Figure 2 furthermore shows with the discontinuous line the components of the drone which communicate data with the processing unit (11). Furthermore, the wireless connection that would have to exist between the processing unit (11) and a base station (13) is also shown.

## Claims

1. A drone for measuring odor concentration under real operating conditions, the drone comprising:
- a measurement chamber (7) housing therein at least one sensor configured for measuring at least one parameter of air samples with odor,
- a first tube (1) fluidically connected at a first end (1.1) to the measurement chamber (7) and comprising a second free end (1.2), spaced from and located below the drone, through which the first tube (1) collects air samples with odor;
- a locating device (12) comprising a position signal measurement element located at the second free end (1.2) of the first tube (1), and
- at least one processing unit (11) communicating with the at least one sensor and communicating with the locating device (12);
wherein
the processing unit (11) is configured for processing and storing the sampling data measured in the measurement chamber (7) and the positioning data of the locating device (12), and for determining the measured odor concentration, assigning to said data the position where it has been acquired.

2. The drone according to claim 1, **characterized in that** it further comprises:
- a sampling system (9) configured for storing a given air volume for calibrating the at least one sensor of the measurement chamber (7); and
- a second tube (2) fluidically connected at a first end (2.1) to the sampling system (9) and comprising a second free end (2.2) through which the second tube (2) collects air samples with odor at the same time the first tube (1) collects samples;
wherein the position of the second end (2.2) of the second tube (2) is located in the position of the second end (1.2) of the first tube (1).

3. The drone according to any of the preceding claims, **characterized in that** the processing unit (11) is configured for assigning the position where the odor sample collections have been acquired by applying a time delay corresponding to the estimated time for a collection acquired at the second free end (1.2) of the first tube (1) to be displaced until it reaches the measurement chamber (7).

4. The drone according to any of the preceding claims, **characterized in that** it comprises cleaning means configured for cleaning the inside of the measurement chamber (7) with clean air, wherein the cleaning means comprise a third tube (3) fluidically connected with the inside of the measurement chamber (7) and a suction pump for suctioning clean air into the measurement chamber (7).

5. The drone according to claim 4, **characterized in that** the third tube (3) is a rigid tube installed in an upper part of the drone and comprises a length smaller than the length of the first and second tubes (1, 2).

6. The drone according to claim 2 and any of claims 3-5, **characterized in that** it comprises for each first tube (1) and second tube (2) a suction pump (8, 10) configured for suctioning air with odor through the first and second tubes, respectively, and at least one solenoid valve (4, 5) configured for regulating the passage of air into the measurement chamber (7).

7. The drone according to any of the preceding claims, **characterized in that** the sampling system (9) is based on a vacuum chamber housing therein a polymer bag, wherein this bag expands when the vacuum is generated by suctioning the air sample with an odor.

8. The drone according to any of the preceding claims, **characterized in that** the measurement chamber (7) further comprises:
- either a temperature sensor,
- or a humidity sensor,
- or a pressure sensor,
- or else a combination of any of the foregoing,
all of which are connected for communicating with the processing unit (11).

9. The drone according to any of the preceding claims, wherein the drone further comprises a system for stabilizing the temperature on the inside of the measurement chamber (7).

10. The drone according to any of the preceding claims, **characterized in that** the measurement chamber (7) comprises at least one sensor which responds with a signal proportional to the concentration of (a) non-specific given chemical compound(s), or a sensor which responds with a signal proportional to the concentration of a specific given chemical compound, or a combination of both.

11. The drone according to any of the preceding claims, **characterized in that** it further comprises a flow sensor located at the inlet of the measurement chamber (7) where the first end (1.1) of the first tube is connected, and it is configured for monitoring the flow rate of the incoming air current.

12. The drone according to any of the preceding claims, wherein the processing unit (11) is configured for running an artificial intelligence module trained for receiving a plurality of parameters measured by the combination of signals from specific and non-specific sensors comprised in the measurement chamber (7) and providing an odor concentration value.

13. The drone according to the preceding claim, wherein the artificial intelligence module has been trained by using the signals provided by the sensors of the measurement chamber (7) while taking measurements in the field and/or in the laboratory for mixtures of gases the odor concentration of which is known.

14. The drone according to the preceding claim, wherein the set of signals provided by the sensors of the measurement chamber (7) used in the artificial intelligence module training phase incorporates data sets corresponding to the time evolution due to ageing of the sensors.

15. A system comprising a drone according to any of claims 1 to 11 and a base station (13), wherein the processing unit (11) of the drone communicates with a processing unit of the base station (13), the processing unit of the base station (13) being configured for running an artificial intelligence module trained for receiving a plurality of parameters measured by the combination of signals from specific and non-specific sensors comprised in the measurement chamber (7) of the drone and providing an odor concentration value.
